# EUROPÄISCHE PATENTANMELDUNG

(11) **EP 1 770 323 A2**
(43) Veröffentlichungstag der Anmeldung: **04.04.2007**
(21) Anmeldenummer: 06020201.7
(22) Anmeldetag: 27.09.2006
(51) Int. Cl.: F16L 55/035

(54) **Einlage für eine Rohrschelle**

(30) Priorität: 29.09.2005 AT 15942005
(71) Anmelder: Semperit Aktiengesellschaft Holding, 1013 Wien (AT)
(72) Erfinder: Susoliak, Ondrej Dr., 2632 Wimpassing (AT); Holzer, Armin DI Dr., 2630 Ternitz (AT)
(74) Vertreter: Secklehner, Günter

(57) **Zusammenfassung**

Die Erfindung beschreibt eine Einlage (1) für eine Rohrschelle aus zumindest bereichsweise mehreren Schichten, umfassend einen, im Querschnitt betrachtet, Basisbereich (2) und Seitenbereiche (3) mit Enden (4). Auf zumindest einer Trägerschicht (7) ist zumindest bereichsweise eine Sperrschicht (8) angeordnet, wobei die Sperrschicht (8) eine andere, insbesondere höhere, Polarität als die Trägerschicht (7) aufweist.

## Beschreibung

Die Erfindung betrifft eine Einlage für eine Rohrschelle aus zumindest bereichsweise mehreren Schichten umfassend einen, im Querschnitt gesehen, Basisbereich und Seitenbereiche mit Enden und eine Rohrschelle.

In der Montagetechnik werden bügelförmige Rohrschellen vielfach mit einer Einlage aus Gummi oder einem anderen Polymermaterial versehen. Die Einlage befindet sich zwischen dem zu haltenden Rohr und der üblicherweise metallischen Rohrschelle und dient der Geräuschdämmung. Dabei sind an die Einlage einander widersprechende Anforderungen gestellt. Einerseits muss sie eine ausreichende Geräuschdämmung gewährleisten und darf nicht zu hart sein, dass beispielsweise Trittschal übertragen wird, andererseits darf sie nicht zu weich sein, dass sie bei einer Relativbewegung der Rohrschelle und des Rohres von der Rohrschelle gezogen wird und abfallen kann.

Bei den derzeit am Markt erhältlichen Rohrschellen mit Einlage tritt häufig das Problem auf, dass während der Rohrmontage durch Schieben oder Drehen des Rohres oder wegen einer thermischen Ausdehnung des montierten Rohres die Einlage von der Rohrschelle gezogen wird und abfällt. Die Einlage fest an der Rohrschelle zu montieren, beispielsweise durch Verklemmen, Verkleben oder durch Umspritzen, ist nicht zweckmäßig, da die Einlage bei bestimmten Anwendungen, beispielsweise beim Verschweißen der Rohrleitungen, demontierbar sein muss.

Derartige Einlagen, insbesondere Schallschutzeinlagen, für Rohrschellen sind beispielsweise aus der EP 0 413 883 A1 bekannt. Das dort beschriebene Strangpressprofil ist auf der, dem Rohr zugewandten, mit vorspringenden Wülsten versehenen, Seite mit einer reibungsmindernden Beschichtung versehen. Die Seitenteile der Einlage, welche die Ränder der bügelförmigen Rohrschelle umgreifen, bestehen aus einem relativ harten Material und sollen verhindern, dass die Einlage von der Rohrschelle abgezogen wird. Diese bekannte Einlage stellt jedoch nur eine Kompromisslösung dar, die keine besonders guten Dämmeigenschaften aufweist und dennoch bei einer Relativbewegung zwischen dem gelagerten Rohr und der Rohrschelle an den Rändern einrollen kann und von der Rohrschelle somit abgezogen werden kann.

Zudem ist aus der EP-A1 auch bekannt, dass die Noppen oder Rippen oder lediglich der Basisbereich mit einer Oberflächenschicht, welche aus einem härteren Material gefertigt ist, versehen ist. Zusätzlich oder alternativ zur Verbesserung der Gleiteigenschaften der Oberflächenschicht kann somit der Verschleißwiderstand erhöht werden und es ist auch möglich, die guten Gleiteigenschaften mit der größeren Oberflächenhärte zu kombinieren oder alternativ vorzusehen.

Des Weiteren zeigt sich bei der Verwendung von Einlagen für Rohrschellen, dass durch den zur Herstellung der Einlage verwendeten Weichmacher eine Beeinträchtigung des Rohres und in Folge der darin transportierten Flüssigkeit stattfinden kann.

Aufgabe der vorliegenden Erfindung ist es daher, den Austritt von Substanzen, insbesondere Weichmacher, aus der Einlage zu verhindern.

Die Aufgabe der Erfindung wird eigenständig durch eine Einlage für eine Rohrschelle gelöst, wobei zumindest eine Trägerschicht und bereichsweise eine Sperrschicht angeordnet sind und die Sperrschicht eine andere, insbesondere höhere, Polarität als die Trägerschicht aufweist und eine Rohrschelle mit einer erfindungsgemäßen Einlage. Vorteilhaft dabei erweist sich, dass die andere Polarität der Sperrschicht den Austritt von Substanzen, insbesondere Weichmacher, von der Trägerschicht in Richtung des Rohres verhindert. Es kann damit eine negative Beeinträchtigung des Rohrmaterials, d.h. dessen mechanische Eigenschaften, insbesondere dessen Festigkeit, durch Weichmacher zumindest weitgehend verhindert bzw. minimiert und somit dessen "Lebensdauer" verlängert werden.

Die Polarität der Sperrschicht ist insbesondere so gewählt, dass sie die Weichmacherwanderung von der Trägerschicht zum Rohr im höchstmöglichen Maße verhindert. Insbesondere ist die Polarität der Sperrschicht aus einem Bereich höherer Polaritäten ausgewählt mit einer unteren Grenze von 5 %, vorzugsweise 10 %, insbesondere 15 % und einer oberen Grenze von 50 %, vorzugsweise 45 %, insbesondere 35 %, höher als die Polarität der Trägerschicht.

In einer Weiterbildung ist vorgesehen, dass die Sperrschicht weichmacherfrei und härter als die Trägerschicht ist, wodurch der Verschleiß der Einlage bei Relativbewegungen zwischen der Einlage und dem Rohr vermindert werden kann.

In einer alternativen Ausführungsform kann zumindest eine weitere Schicht, welche als Gleitschicht ausgebildet ist, angeordnet sein, wodurch das Einführen des Rohres in eine Rohrschelle mit Einlage erleichtert wird.

Es kann auch die Sperrschicht die Abstütz- und Auflagefläche für ein Rohr bilden, wobei gegebenenfalls die Sperrschicht und die Gleitschicht von derselben Schicht gebildet sind und somit durch die Anordnung nur einer Schicht sowohl optimale Sperreigenschaften, die den Austritt des Weichmachers aus der Trägerschicht verhindern und andererseits optimale Gleiteigenschaften, welche ein leichtes Einführen des Rohres in die Rohrschelle ermöglichen, bewirkt werden.

In einer Weiterbildung ist vorgesehen, dass die Abstützflächen in einer Ebene liegen, wodurch ein gleichmäßiger Widerstand beim Einführen des Rohres in die Rohrschelle mit der erfindungsgemäßen Einlage gegeben ist und dadurch das Zusammenfügen der einzelnen Bestandteile eines gehalterten Rohres in einer Rohrschelle mit Einlage erleichtert wird. Zudem kann bei Versagen einer Abstützfläche die daran benachbart angeordnete Abstützfläche die Funktion der versagenden Abstützfläche übernehmen.

In einer Weiterbildung der Einlage ist vorgesehen, dass die Sperrschicht Erhöhungen bzw. Vertiefungen aufweist, wodurch die Kontaktfläche zwischen der Einlage, insbesondere der Sperrschicht, und dem Rohr vermindert wird und somit die Gleiteigenschaften abermals verbessert werden können. Es werden mit der Anordnung der Sperrschicht mit Erhöhungen bzw. Vertiefungen einerseits ein Austreten des Weichmachers aus der Trägerschicht verhindert und andererseits zudem die Gleiteigenschaften verbessert.

In einer Weiterbildung ist vorgesehen, dass die Erhöhungen bzw. Vertiefungen regelmäßig verteilt über die Sperrschicht angeordnet sind, wodurch es über den Gesamtumfang des Rohres zu einem geringst möglichen Widerstand bei Relativbewegungen zwischen der Einlage und dem Rohr kommt und somit das Rohr einfach verschoben werden kann bzw. sich bei Temperaturschwankungen innerhalb des ihm zur Verfügung stehenden Spielraums bewegen kann.

Die Erhöhungen bzw. Vertiefungen können unregelmäßige Formen aufweisen, wodurch das Ausmaß der Kontaktfläche zwischen Einlage und Rohr verringert wird und dadurch die Gleiteigenschaften verbessert werden.

Vorteilhafterweise beträgt der Abstand vom höchsten Punkt der Erhöhung bis zum tiefsten Punkt der Vertiefung 0,01 mm bis 5 mm, wodurch die Anordnung der Sperrschicht zu besseren Gleiteigenschaften führt und das Ausmaß der Flächen der Kontaktstellen verringert wird, wodurch die potentiellen Gefahrenstellen, an denen der Weichmacher über direkten Kontakt von der Einlage in das Rohr übertreten kann, verringert werden.

In einer Weiterbildung ist vorgesehen, dass die Sperrschicht an jener dem Rohr zugewandten Oberfläche der Einlage zumindest bereichsweise angeordnet ist, wodurch an den Kontaktstellen zwischen Einlage und Rohr ein Übertreten des Weichmachers in Richtung des Rohres verhindert wird und zudem optimale Gleiteigenschaften erzielt werden können.

Die Anordnung der Sperrschicht im Bereich jener Flächen, die mit dem Rohr in Kontakt sind, erweist sich besonders vorteilhaft, da vorwiegend an jenen Stellen ein Übertritt des Weichmachers stattfindet und dieser somit unterbleibt.

In einer Weiterbildung ist vorgesehen, dass die Einlage Längsrippen und/oder Noppen aufweist und die Sperrschicht auf diesen angeordnet ist, wodurch gerade an jenen Stellen, welche potentiell mit dem Rohr in Kontakt gelangen können, die Sperrschicht angeordnet ist und der Übertritt des Weichmachers verhindert und abermals die Gleiteigenschaften verbessert werden können.

In einer alternativen Ausführungsform ist vorgesehen, dass die Sperrschicht vollflächig angeordnet ist, wodurch ein absoluter Schutz gegen das Übertreten des Weichmachers gegeben ist.

Die Höhe der Sperrschicht ist aus einem Bereich mit einer unteren Grenze von 0,1 mm, vorzugsweise 0,5 mm, insbesondere 0,7 mm und einer oberen Grenze von 10 mm, vorzugsweise 5 mm, insbesondere 1 mm ausgewählt, wodurch die Elastizität der Einlage nicht beeinträchtigt wird.

Der Mittenbereich des Basisbereichs kann in Form eines Steges ausgebildet sein, an welchen sich Noppen und/oder Längsrippen anschließen, die die Abstützflächen für das Rohr bilden, wodurch Erhöhungen und Vertiefungen angeordnet sind und die Kontaktfläche zwischen Einlage und Rohr vermindert wird und damit die Gleiteigenschaften der Einlage verbessert werden, weil der Widerstand, welcher von der Größe der Fläche der aneinander liegenden Bauteile abhängig ist, beim Zusammenfügen der Rohrschelle mit Einlage und dem Rohr verringert wird.

In einer Weiterbildung ist vorgesehen, dass die Noppen und/oder Längsrippen einen größeren Durchmesser aufweisen, als die Dicke des Steges ist, wodurch sich durch die Noppen und Längsrippen Erhöhungen im Querschnitt der Einlage ergeben und daher die Kontaktfläche mit dem Rohr verringert wird und somit der Reibungswiderstand beim Einführen des Rohres in eine Rohrschelle vermindert wird.

Weiters können mehrere Stege bzw. Noppen und/oder Längsrippen im Basisbereich angeordnet sein, wodurch der Effekt der Reduktion des Reibungswiderstandes erhöht wird.

Des weiteren ist möglich, dass die Noppen und/oder Längsrippen und Stege aus unterschiedlichen Materialien hergestellt sind, wodurch beispielsweise die Noppen und Längsrippen aus einem Elastomer mit größerer Härte als die Stege ausgebildet sein können, um einen günstigen Gleitkoeffizienten zu erzielen bzw. den Austritt des Weichmachers an den Kontaktflächen zu erschweren.

Die Noppen und/oder Längsrippen können die Stege an jener der Rohrschelle abgewandten Oberfläche zumindest im unmontierten Zustand überragen, wodurch die gewünschten Effekte der guten Gleiteigenschaft und die Verhinderung des Austritts des Weichmachers erzielt werden.

Es können Noppen und/oder Längsrippen unterschiedlichen Durchmessers, sowohl in Draufsicht als auch im Querschnitt betrachtet, angeordnet sein, wodurch es zu einer Reduktion der Kontaktfläche zwischen Einlage und Rohr kommt und somit abermals der Reibungswiderstand reduziert und der Verschleißwiderstand erhöht wird.

In einer alternativen Ausführungsform ist vorgesehen, dass die Noppen und/oder Längsrippen, welche an den Steg im Mittenbereich anschließen, einen geringeren Durchmesser aufweisen als die Längsrippen in den Seitenbereichen, wodurch gegebenenfalls nur die Rippen im Seitenbereich einen Kontakt mit dem Rohr herstellen und erst bei längerer Lebensdauer der Einlage der Durchmesser der Noppen und/oder Längsrippen im Seitenbereich soweit reduziert ist, dass ein Kontakt zwischen Längsrippen im Mittenbereich und dem Rohr hergestellt wird und dadurch auch über einen sehr langen Zeitraum eine gute Gleiteigenschaft des Rohres in der Einlage gegeben ist bzw. der Weichmacheraustritt gering gehalten wird.

In einer Weiterbildung können die Längsrippen quer zur Längsrichtung segmentiert sein, wodurch sich die Flexibilität der Einlage erhöht.

Die Längsrippen können im Querschnitt rund, oval, polygonal oder eine andere Form aufweisen, wodurch die Querschnittsform der Längsrippen an die jeweiligen Bedürfnisse angepasst werden kann.

Weiters ist vorgesehen, dass die Enden der Seitenbereiche aufeinander zugebogen sind, sodass im montierten Zustand die Enden der Seitenbereiche die Rohrschelle umgreifen und somit ein Verrutschen bzw. ein Abfallen der Einlage von der Rohrschelle verhindert werden kann.

Die Einlage kann einen Freiraum, vorzugsweise im Mittenbereich des Basisbereichs, aufweisen, wobei der Freiraum vollständig vom Material des Basisbereichs umschlossen sein kann. Dabei erweist sich von Vorteil, dass bei hoher Druckbeaufschlagung die Einlage in ihrer Höhe zumindest bereichsweise reduziert werden kann und dadurch das Einschieben eines Rohres in eine Rohrschelle mit einer erfindungsgemäßen Einlage erleichtert werden kann.

In einer alternativen Ausführungsform kann im Freiraum Überdruck bestehen, wodurch nicht nur durch das Material selbst Widerstand gegen eine Deformierung der Einlage gegeben ist.

Weiters können in zumindest einem Seitenbereich Erhöhungen angeordnet sein, wodurch einerseits eine zusätzliche Abstützfläche für das Rohr gebildet wird und andererseits auch eine bessere Verwindungssteifigkeit der Einlage gegeben ist.

In einer Weiterbildung können die Erhöhungen in zumindest einem Seitenbereich und/oder an den Seitenflächen auch mehrschichtig ausgebildet sein, wodurch - wenn beispielsweise die Erhöhung der ersten Schicht von der Trägerschicht gebildet wird und die Erhöhung der weiteren Schicht von der Sperrschicht gebildet wird - auch diese Erhöhungen in den Seitenbereichen als Barriere dienen und somit das Aus- und Übertreten des Weichmachers in Richtung des Rohres verhindern und die Gleiteigenschaften verbessern.

In einer Weiterbildung der Einlage ist vorgesehen, dass die Sperrschicht aus einem Elastomer und gegebenenfalls Füllstoff, Russ und/oder Extrusionshilfsmittel gebildet ist, wodurch ein hohes Maß an Elastizität und somit Biegsamkeit der Einlage erzielt werden kann, sodass sich die Einlage an die Krümmung der Rohrschelle bzw. an die Form des Rohres anpassen lässt, ohne dabei zu brechen. Als Hilfsstoffe können unter anderem anorganische Füllstoffe, Russ und Extrusionshilfsmittel, welche den Herstellungsvorgang der Extrusion erleichtern, zugefügt sein.

Das Elastomer der Sperrschicht ist von einem natürlichen und/oder synthetischen Kautschuk gebildet, wobei der Kautschuk aus einer Gruppe umfassend Naturkautschuk (NK), Styrol-Butadien-Kautschuk (SBR), Acrylnitril-1,3-Butadien-Kautschuk, Nitril-Butyl-Kautschuk (NBR), NVC-, Chloropren- (CR), Ethen/Propylen-Dien Terpolymere (EPDM)-Kautschuk, chlorierten bzw. chlorsulfonierten Polyethylenkautschuk (CM bzw. CSM), Epichlorhydrinkautschuk (ECO), Fluorkautschuk (FKM), Ethylenvinylacetatkautschuk (EAM), Silikonkautschuk (VMQ), Polyurtehankautschuk, oder einem Verschnitt davon, ausgewählt ist. Dabei erweist sich als vorteilhaft, dass handelsübliche Rohstoffe für die Herstellung der Einlage verwendet werden können und somit eine kostengünstige Produktion möglich ist.

Russ liegt in einer Menge aus einem Bereich mit einer unteren Grenze von 0,01 phr, vorzugsweise 0,1 phr, insbesondere 2 phr und einer oberen Grenze von 250 phr, vorzugsweise 150 phr, insbesondere 100 phr vor, wodurch die Einlage eine schwarze Färbung erhält. Schwarze Schichten können jedoch auch ohne die Zugabe von anorganischen Füllstoffen ausgeführt sein bzw. können andersfärbige Schichten auch russfrei hergestellt werden.

In einer Weiterbildung der Einlage ist vorgesehen, dass ein Füllstoff aus einer Gruppe umfassend Karbonate, z.B. Kreide, Sulfate, Silikate, z.B. Kaolin, Kieselsäure, Oxide und/oder organische Füllstoffe beigemengt ist, wobei die Menge aus einem Bereich mit einer unteren Grenze von 0,01 phr, vorzugsweise 0,1 phr, insbesondere 1 phr, und einer oberen Grenze von 300 phr, vorzugsweise 200 phr, insbesondere 100 phr, ausgewählt ist. Dabei erweist sich von Vorteil, dass durch die Verwendung der genannten Füllstoffe keine hochwertigen Rohstoffmaterialien verwendet werden müssen, die das Produkt verteuern aber dennoch die Eigenschaften der Einlage nicht verschlechtert werden.

Des weiteren kann ein Extrusionshilfsmittel in einer Menge aus einem Bereich mit einer unteren Grenze von 0,01 phr, vorzugsweise 0,1 phr, insbesondere 0,5 phr, und einer oberen Grenze von 30 phr, vorzugsweise 20 phr, insbesondere 15 phr, beigemengt werden, wodurch ein vereinfachtes Herstellen der Einlage im Zuge des Extrusionsprozesses ermöglicht wird.

Weiters kann ein Alterungsschutz mit einer Menge aus einem Bereich mit einer unteren Grenze von 0,01 phr, vorzugsweise 0,1 phr, insbesondere 0,5 phr und einer oberen Grenze von 15 phr, vorzugsweise 10 phr, insbesondere 5 phr beigemengt sein, wodurch ein vorzeitiges Altem der Einlage und somit eine vorzeitige Funktionsunfähigkeit, beispielsweise durch eine zu hohe Porosität der Einlage, verhindert werden kann.

In einer Weiterbildung kann ein Vulkanisationsbeschleuniger aus einer Gruppe umfassend Xanthogenate, Dithiocarbamate, Tetramethylthiuramdisulfid (TMTD) u. a. Thiurame, Benzothiazol-2-thiol-Derivate u. a. Thiazole, Guanidine, Thioharnstoff-Derivate wie z.B. N,N-Ethylenthioharnstoff , Amin-Derivate, N-Cyclohexyl-2-benzothiazolsulfenamid (CBS), 2-Mercaptobenzothiazoldisulfid enthalten sein, wobei die Menge aus einem Bereich mit einer unteren Grenze von 0,1 phr, vorzugsweise 1 phr, insbesondere 2 phr, und einer oberen Grenze von 15 phr, vorzugsweise 10 phr, insbesondere 5 phr, ausgewählt ist. Von Vorteil dabei zeigt sich, dass im Herstellungsprozess der Einlage die Vulkanisation beschleunigt werden kann und somit ein erhöhter Durchsatz von Einlagen möglich ist.

Des weiteren kann ein Aktivator zur Vernetzung aus einer Gruppe umfassend Triallylcyanurat (TCA), Triethylenglykoldimethacrylat (TEDMA), Ethylenglykoldimethacrylat (EDMA), 1,4-Butandioldimethacrylat (BDMA), Trimethylol-(3-propan)-trimethacrylat (TRIM) enthalten sein, wobei die Menge aus einem Bereich mit einer unteren Grenze von 0,01 phr, vorzugsweise 0,1 phr, insbesondere 1 phr, und einer oberen Grenze von 10 phr, vorzugsweise 5 phr, insbesondere 3 phr, ausgewählt ist. Durch die Zugabe des Aktivators wird die Vernetzung der Einlage beschleunigt und verbessert, und die Beständigkeit gegen mechanische Beanspruchung erhöht.

Durch die Zugabe von Peroxid in einer Menge aus einem Bereich mit einer unteren Grenze von 0,1 phr, vorzugsweise 1 phr, insbesondere 3 phr, und einer oberen Grenze von 20 phr, vorzugsweise 10 phr, insbesondere 5 phr, kann eine optimale Vernetzung des Elastomers erzielt werden.

Des Weiteren kann Schwefel oder eine Schwefelverbindung in einer Menge aus einem Bereich mit einer unteren Grenze von 0,01 phr, vorzugsweise 0,1 phr, insbesondere 1 phr und einer oberen Grenze von 20 phr, vorzugsweise 15 phr, insbesondere 10 phr, enthalten sein, wodurch die Vernetzung und auch die Vulkanisation von Kautschuk erleichtert werden kann.

In einer Weiterbildung kann Metall oder Metallverbindungen, wie Zink oder eine Zinkverbindung, insbesondere Zinkoxid, Magnesium oder eine Magnesiumverbindung, insbesondere Magnesiumoxid, aus einer Menge mit einer unteren Grenze von 0,1 phr, vorzugsweise 1 phr, insbesondere 3 phr, und einer oberen Grenze von 20 phr, vorzugsweise 15 phr, insbesondere 10 phr, enthalten sein. Durch die Verwendung von Metallen bzw. Metallverbindungen wird ebenfalls die Vernetzung des Elastomers verbessert.

Des weiteren können Verarbeitungshilfsstoffe ausgewählt aus einer Gruppe umfassend Metallseifen, Fettsäureester, Fettalkohole, Fettalkoholester, Fettamine, Stearinsäure, Palmitinsäure, Elaidinsäure, Octadecensäure, Linolelaidinsäure, Linolsäure, Arachinsäure und deren Gemische in einer Menge aus einem Bereich mit einer unteren Grenze von 0,1 phr, vorzugsweise 1 phr, insbesondere 2 phr, und einer oberen Grenze von 15 phr, vorzugsweise 10 phr, insbesondere 5 phr, beigemengt sein, wodurch ein optimierter und beschleunigter Herstellungsprozess für die Einlage ermöglicht wird. Durch die Zugabe der Fettsäure bzw. Fettsäurederivate werden zudem die Gleiteigenschaften verbessert.

Es kann ein Raum zwischen der Rohrschelle und zumindest dem Mittenbereich des Basisbereichs der Einlage gebildet sein, wobei der Raum vorzugsweise zwischen den, an den Mittenbereich angrenzenden, Längsrippen gebildet ist, wodurch die Möglichkeit geschaffen werden, dass der Mittenbereich des Basisbereichs bei Druckbeaufschlagung auf die Einlage in diesen Raum gedrängt wird. Vorteilhaft dabei zeigt sich, dass gegebenenfalls das Material der Einlage in deren Verwendungsstellung in den zur Verfügung stehenden Raum gedrängt werden kann.

Zum besseren Verständnis der Erfindung wird diese anhand der nachfolgenden Figuren näher erläutert.

Es zeigt jeweils in stark vereinfachter Darstellung:
- Fig. 1a - d: einen Querschnitt durch verschiedene Ausführungsvarianten einer erfindungsgemäßen Einlage;
- Fig. 2: eine Draufsicht auf eine erfindungsgemäße Einlage.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

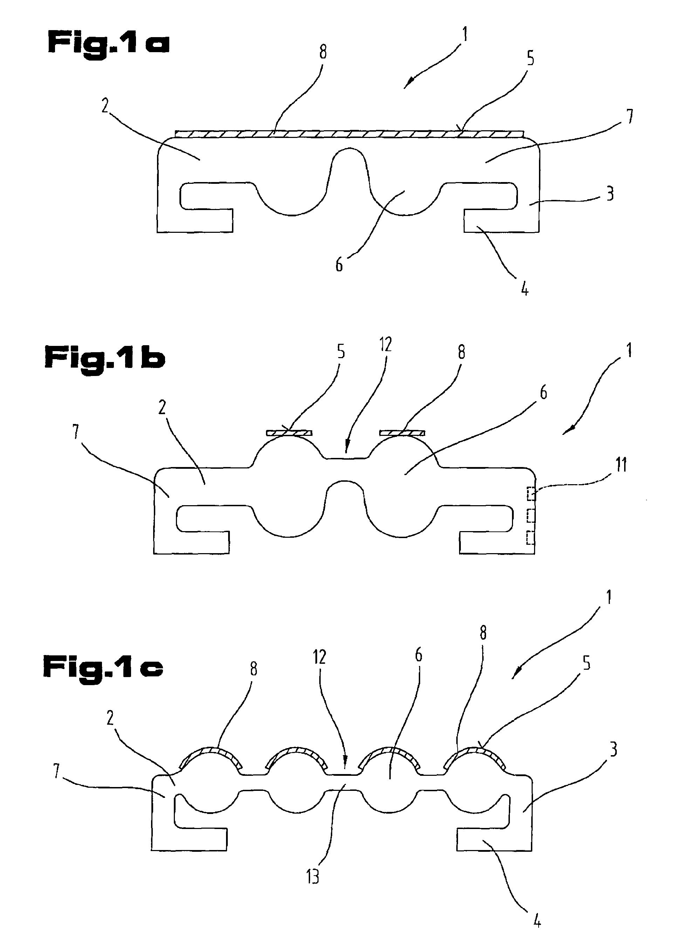

Die Fig. 1a bis 1d zeigen im Querschnitt unterschiedliche Ausfühnmgsvarianten der erfindungsgemäßen Einlage 1 für eine Rohrschelle. Die Einlage 1 besteht, im Querschnitt betrachtet, aus einem Basisbereich 2 und aus jeweils an den Basisbereich 2 benachbart angeordneten Seitenbereichen 3 mit Enden 4. Der Basisbereich 2 bildet eine Abstützfläche 5 für ein Rohr bzw. sind auf dem Basisbereich 2 Noppen und/oder Längsrippen 6 angeordnet, die die Abstützflächen 5 für das Rohr bilden.

Die Einlage 1 besteht aus mehreren Schichten, wobei zumindest eine Trägerschicht 7 und zumindest bereichsweise eine Sperrschicht 8 angeordnet sind. Die Sperrschicht 8 weist eine höhere Polarität als die Trägerschicht 7 auf. Die Polarität der Sperrschicht 8 ist so gewählt, dass ein Aus- und Übertreten von dem in der Trägerschicht 7 vorkommenden Weichmacher in Richtung des Rohres verhindert wird. Insbesondere ist die Polarität der Sperrschicht 8 um 5 % bis 50 % höher als die Polarität der Trägerschicht 7.

Zudem ist die Sperrschicht 8 härter als die Trägerschicht 7. Neben der Sperrschicht 8 kann eine weitere Schicht in Form einer Gleitschicht angeordnet sein, wobei die Sperrschicht 8 und die Gleitschicht von derselben Schicht gebildet werden können und die Abstützfläche 5 für das Rohr bilden.

Die Sperrschicht 8 kann vorzugsweise durch Coextrusion oder durch ein anderes aus dem Stand der Technik bekanntes Verfahren, wie z.B. Aufdampfen, Besprühen, Tauchen, etc. auf die Trägerschicht 7 aufgebracht werden.

In Fig. 1a wird gezeigt, dass sich im Basisbereich 2 zwei Längsrippen 6 erstrecken. Die Längsrippen 6 können nur an jener der Rohrschelle zugewandten Oberfläche angeordnet sein, und an der gegenüberliegenden Oberfläche kann die Sperrschicht 8 sowohl einerseits bereichsweise, als auch andererseits vollflächig aufgebraucht sein, um ein Austreten des Weichmachers aus der Trägerschicht 7 zu verhindern. Alternativ zur Anordnung von Längsrippen 6 oder ergänzend zu den Längsrippen 6 können auch Noppen, welche regelmäßig verteilt auf der Trägerschicht 7 vorliegen, angeordnet werden.

Die Enden 4 der Seitenbereiche 3 sind aufeinander zugebogen, sodass diese im montierten Zustand die Längsränder der Rohrschelle umgreifen und ein Verrutschen bzw. eine Demontage der Einlage 1 von der Rohrschelle verhindert wird.

In Fig. 1b ist eine alternative Ausführungsform der Einlage 1 dargestellt. Der Basisbereich 2 umfasst einen Mittenbereich 12, der in Form eines Steges 13 ausgebildet ist, an den sich Längsrippen 6 bzw. Noppen anschließen. Die Längsrippen 6 und die Noppen bilden dabei die Abstützflächen 5 für ein Rohr. Die Längsrippen 6 weisen in der Regel größere Abmessungen bezüglich des Durchmessers auf, wie die Abmessung der Dicke des Steges 13 beträgt, wodurch sich Erhöhungen auf jener dem Rohr zugewandten Oberfläche ergeben. Es können im Basisbereich 2 auch mehrere Stege 13 bzw. Noppen und/oder Längsrippen 6 angeordnet sein.

Weiters zeigt Fig. 1b die erfindungsgemäße Einlage 1 mit Längsrippen 6, wobei die Längsrippen 6 benachbart zum Mittenbereich 12 des Basisbereich 2 angeordnet sind und an den Seitenbereichen 3 Ausnehmungen 11 vorliegen, die das Biegen der Seitenbereiche 3, insbesondere das aufeinander Zubiegen der Enden 4 der Seitenbereiche 3, erleichtern. Die Längsrippen 6 sind sowohl an jener der Rohrschelle zugewandten Oberfläche als auch an der gegenüberliegenden Oberfläche angeordnet. An den Längsrippen der dem Rohr zugewandten Oberfläche ist die Abstützfläche 5 angeordnet.

Fig. 1c zeigt eine weitere alternative Ausführungsform der Einlage 1, bei welcher im Basisbereich 2 mehrere Längsrippen 6 gleichmäßig voneinander beabstandet angeordnet sind. Die Längsrippen 6 weisen an jener dem Rohr zugewandten Oberfläche Abstützflächen 5 auf, an welchen die Sperrschicht 8 angeordnet ist. Die Sperrschicht 8 kann sowohl entsprechend der geometrischen Form der Längsrippen 6 ausgebildet sein, als auch nur - wie in Fig. 1b dargestellt - an der höchsten Stelle der Längsrippen 6 aufgebracht sein.

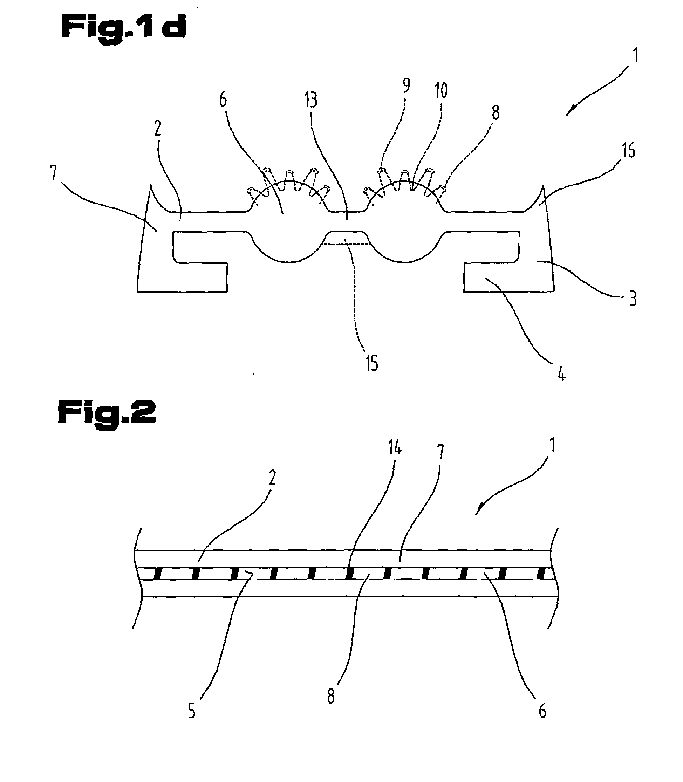

In Fig. 1d ist gezeigt, dass die Sperrschicht 8 Erhöhungen 9 bzw. Vertiefungen 10 aufweisen kann, wodurch die Abstützfläche 5 für das Rohr verkleinert wird und somit der Reibungswiderstand verringert wird. Die Erhöhungen 9 bzw. Vertiefungen 10 können regelmäßig verteilt in der Sperrschicht 8 angeordnet sein. Die Erhöhungen 9 und Vertiefungen 10 können sowohl regelmäßige als auch unregelmäßige Formen aufweisen.

Der Abstand vom höchsten Punkt der Erhöhung bis zum tiefsten Punkt der Vertiefung beträgt zwischen 0,01 mm und 5 mm. Der Abstand kann je nach Dimensionierung der Einlage 1 variieren, d.h. bei einer sehr groß dimensionierten Einlage 1 kann der Abstand auch über den angegebenen Bereichen liegen.

Wie in den Fig. 1b bis 1d dargestellt, liegt die Abstützfläche 5, die auf mehreren Noppen und/oder Längsrippen 6 angeordnet ist, zumindest bereichsweise auf einer Ebene.

In einer alternativen Ausführungsform, bei welcher die Sperrschicht 8 beispielsweise vollflächig ausgebildet ist und Längsrippen 6 angeordnet sind, kann die Sperrschicht 8 auch auf unterschiedlichen Ebenen liegen.

In einer weiteren alternativen Ausführungsform können die Noppen und/oder Längsrippen 6 im Querschnitt unterschiedliche Durchmesser aufweisen, wodurch die Abstützflächen 5 auch auf unterschiedlichen Ebenen liegen können. Beispielsweise kann somit bei Deformation der Einlage 1 während der Halterung eines Rohres dennoch gewährleistet werden, dass das Rohr nicht mit der Rohrschelle in direkten Kontakt kommt und somit beispielsweise die schalldämmende Wirkung der Einlage 1 verloren geht.

In einer alternativen Ausführungsform ist es auch möglich, dass die Noppen und/oder Längsrippen 6 aus unterschiedlichen Materialien im Vergleich zum Material der Trägerschicht 7 bzw. zum Steg 13 gebildet sind.

Es überragen sowohl im unmontierten als auch im montierten Zustand die Noppen und Längsrippen 6 die Stege 13 an jener dem Rohr zugewandten Oberfläche. Nach längerer Verwendung der Einlage 1 kann allerdings durch Ausübung des permanenten Drucks des Rohres auf die Einlage 1 bewirkt werden, dass die Noppen und/oder Längsrippen 6 und die Stege 13 auf der gleichen Ebene an jener dem Rohr zugewandten Oberfläche angeordnet sind. Dieser Zustand tritt allerdings erst bei sehr langer, das heißt mehrjähriger Verwendung der Einlage 1 in einer Rohrschelle auf. Durch die erfindungsgemäße Einlage 1, d.h. durch die gewählte Konstruktion der Einlage und durch die verwendeten Materialien soll dieser Effekt weitestgehend verhindert werden.

Die Noppen und/oder Längsrippen 6 können sowohl in Draufsicht, als auch im Querschnitt unterschiedliche Durchmesser aufweisen. Vorzugsweise weisen die Längsrippen 6, welche benachbart zum Mittenbereich 12 des Basisbereich 2 angeordnet sind, einen geringeren Durchmesser auf, als jene Längsrippen 6, welche benachbart zu den Seitenbereichen 3 am Basisbereich 2 angeordnet sind.

Wie in Fig. 2 dargestellt, können die Längsrippen 6 mit der darauf aufgebrachten Sperrschicht 8 quer zur Längsrichtung segmentiert sein, wodurch die Biegsamkeit der erfindungsgemäßen Einlage 1 verbessert wird. Die Segmentierung 14 kann in Form von Ausnehmungen 11 im Material gebildet sein. In einer alternativen Ausführungsform kann die Segmentierung 14 auch lediglich durch Einschnitte an den Längsrippen 6, Noppen oder der Sperrschicht 8 erfolgen.

Im Querschnitt können die Längsrippen 6 entweder rund, oval, polygonal oder eine andere beliebige geometrische Form aufweisen. In einer bevorzugten Ausführungsform weisen die Längsrippen 6 einen runden bzw. annähernd runden Querschnitt auf. Die Noppen sind in Draufsicht ebenfalls rund bzw. annähernd kreisrund ausgebildet.

In einer Weiterbildung der Einlage 1 kann ein Freiraum 15 im Basisbereich 2 angeordnet sein, wobei dieser Freiraum 15 vollständig vom Material des Basisbereichs oder auch nur bereichsweise vom Material des Basisbereichs 2 umschlossen sein kann. Ist der Freiraum 15 vollständig vom Material des Basisbereichs 2 umschlossen, so kann im Freiraum 15 ein Überdruck herrschen, der ein Zusammendrücken der Einlage 1 beim Einführen eines Rohres in eine Rohrschelle mit einer erfindungsgemäßen Einlage 1 verhindert.

Ist der Freiraum 15 beispielsweise nur bereichsweise vom Material des Basisbereichs 2 umschlossen, so kann dieser Freiraum 15 vor allem dazu dienen, dass der Steg 13 in diesen Freiraum 15 bei Druckbeaufschlagung verschoben wird und dadurch die Längsrippen 6 bzw. die Noppen stärker hervorgehoben werden und somit die Gleiteigenschaften des Rohres auf der Einlage 1 verbessert werden.

In einer Weiterbildung der Einlage 1 kann im Seitenbereich 3 zumindest eine Erhöhung 16 angeordnet sein. Diese Erhöhung 16 kann die gleiche Funktion wie eine Längsrippe 6 oder die Noppen übernehmen. Die Erhöhung 16 kann an ihrer dem Rohr zugewandten Oberfläche ebenfalls mit einer Sperrschicht 8 beschichtet sein (nicht dargestellt).

Selbstverständlich ist es auch möglich, die Trägerschicht 7 mehrschichtig aufzubauen. Wie bereits zuvor beschrieben, kann auch die Sperrschicht 8 mit einer weiteren Schicht, insbesondere einer Gleitschicht überschichtet sein bzw. noch andere zusätzliche Schichten aufweisen. Ziel der Sperrschicht 8 ist es primär, das Aus- und Übertreten des Weichmachers aus der Trägerschicht in Richtung des Rohres zu verhindern. Sekundär werden durch die Anordnung der Sperrschicht 8 bessere Gleiteigenschaften bewirkt.

Es können allerdings nicht nur die Längsrippen 6 und/oder Noppen mehrschichtig ausgebildet sein, sondern auch die Erhöhungen 16 im Seitenbereich 3 bzw. an den Seitenflächen des Seitenbereichs 3.

Die Sperrschicht 8 kann aus einem mit Füllstoff, Russ, Vernetzungsmittel, Beschleuniger und/oder Extrusionshilfsmittel ausgerüsteten Elastomer gebildet sein.

Die Höhe der Sperrschicht 8 kann 0,1 mm bis 10 mm betragen, wobei abhängig von den Dimensionen der Rohrschelle, der Einlage 1 und dem Rohr die Höhe der Sperrschicht 8 variieren kann. Ist die Einlage 1 sehr groß dimensioniert, kann der Wert für die Höhe der Sperrschicht 8 auch über den angegebenen Bereichen liegen.

Die Sperrschicht 8 ist aus einem Elastomer, welches auf Basis von einem natürlichen und/oder synthetischen Kautschuk aufgebaut wird, geformt. Der Kautschuk ist aus einer Gruppe umfassend Naturkautschuk (NK), Styrol-Butadien-Kautschuk (SBR), Acrylnitril-1,3-Butadien-Kautschuk, Nitril-Butyl-Kautschuk (NBR), NVC-, Chloropren- (CR), Ethen/Propylen-Dien Terpolymere (EPDM)-Kautschuk oder einem Verschnitt, ausgewählt.

Des Weiteren kann in der Einlage 1 Russ beigemengt sein, wobei die Menge des Russ aus einem Bereich mit einer unteren Grenze von 0,01 phr, vorzugsweise 0,1 phr, insbesondere 2 phr, und einer oberen Grenze von 250 phr, vorzugsweise 150 phr, insbesondere 100 phr, ausgewählt ist. Hellfärbige Schichten können auch russfrei ausgeführt werden.

Als Füllstoffe können unterschiedliche Materialien verwendet werden, wobei bevorzugt Carbonate, z.B. Kreide, Sulfate, Silikate, z.B. Kaolin, Kieselsäure, Oxide und/oder organische Füllstoffe in einer Menge von einem Bereich mit einer unteren Grenze von 0,01 phr, vorzugsweise 0,1 phr, insbesondere 1 phr, und einer oberen Grenze von 300 phr, vorzugsweise 200 phr, insbesondere 100 phr, beigemengt sind. Schwarze Schichten können auch ohne anorganische Füllstoffe ausgeführt werden.

Es können auch weitere Hilfsmittel, wie z.B. Extrusionshilfsmittel, die das Herstellungsverfahren vereinfachen, in einer Menge aus einem Bereich mit einer unteren Grenze von 0,01 phr bis 30 phr, wobei auch 0,1 phr, 0,5 phr, 10 phr, 3 phr, 15 phr, 20 phr, etc. verwendet werden.

Um die Haltbarkeit der Einlage 1 zu verlängern, kann ein Alterungsschutzmittel in einer Menge von 0,01 phr bis 15 phr beigemengt werden.

Um das Herstellungsverfahren abzukürzen bzw. zu beschleunigen, wird ein Vulkanisationsbeschleuniger aus einer Gruppe umfassend Xanthogenate, Dithiocarbamate, Tetramethylthiuramdisulfid (TMTD) u. a. Thiurame, Benzothiazol-2-thiol-Derivate u. a. Thiazole, Guanidine, Thioharnstoff-Derivate wie z.B. N,N-Ethylenthiohamstoff, Amin-Derivate, N-Cyclohexyl-2-benzothiazolsulfenamid (CBS), 2-Mercaptobenzothiazoldisulfid in einer Menge aus einem Bereich mit einer unteren Grenze von 0,1 phr, vorzugsweise 1 phr, insbesondere 2 phr, und einer oberen Grenze von 15 phr, vorzugsweise 10 phr, insbesondere 5 phr, beigemengt.

Es können noch weitere Hilfsstoffe, wie z.B. Aktivatoren zur Vernetzung aus einer Gruppe umfassend Triallylcyanurat (TCA), Triethylenglykoldimethacrylat (TEDMA), Ethylenglykoldimethacrylat (EDMA), 1,4-Butandioldimethacrylat (BDMA), Trimethylol-(3-propan)-trimethacrylat (TRIM) enthalten sein, in einer Menge von 0,01 phr bis 10 phr, beigemengt werden.

Neben den bereits erwähnten Substanzen kann beispielsweise auch Peroxid in einer Menge von 0.1 phr bis 20 phr der Einlage 1 beigemengt sein.

Des Weiteren kann Schwefel oder Schwefelverbindungen einer Menge von 0,01 phr bis 20 phr der Einlage 1 beigemengt sein.

Es ist auch möglich, Metall oder Metallverbindungen, wie Zink oder eine Zinkverbindung, insbesondere Zinkoxid, Magnesium oder eine Magnesiumverbindung, insbesondere Magnesiumoxid der Einlage 1 beizumengen. Die Menge der Metallverbindung ist aus einem Bereich von 0,1 phr bis 20 phr ausgewählt.

Des Weiteren können auch Fettsäuren und/oder Fettsäurederivate aus einer Gruppe umfassend Stearinsäure, Palmitinsäure, Elaidinsäure, Octadecensäure, Linolelaidinsäure, Linolsäure, Arachinsäure, etc. und weitere Verarbeitungshilfsstoffe, wie Metallseifen, Fettsäureester, Fettalkohol, Fettalkoholester, Fettamine oder Gemische davon in einer Menge von 0,1 phr bis 15 phr der Einlage 1 beigemengt sein. In der Kautschuktechnologie wird unter dem Begriff Stearinsäure ein Gemisch verschiedener Fettsäuren unterschiedlicher Herkunft verstanden.

Der Ordnung halber sei abschließend darauf hingewiesen, dass zum besseren Verständnis des Aufbaus der Einlage 1 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1a, 1b, 1c, 1d; 2 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Einlage
- 2: Basisbereich
- 3: Seitenbereich
- 4: Ende
- 5: Abstützfläche

- 6: Längsrippe
- 7: Trägerschicht
- 8: Sperrschicht
- 9: Erhöhung
- 10: Vertiefung

- 11: Ausnehmung
- 12: Mittenbereich
- 13: Steg
- 14: Segmentierung
- 15: Freiraum

- 16: Erhöhung

## Patentansprüche

1. Einlage (1) für eine Rohrschelle aus zumindest bereichsweise mehreren Schichten umfassend, einem, im Querschnitt betrachtet, Basisbereich (2) und Seitenbereiche (3) mit Enden (4), **dadurch gekennzeichnet, dass** zumindest eine Trägerschicht (7) und bereichsweise eine Sperrschicht (8) auf der Trägerschicht angeordnet sind, wobei die Sperrschicht (8) eine andere, insbesondere höhere, Polarität als die Trägerschicht (7) aufweist.

2. Einlage (1) nach Anspruch 1, **dadurch gekennzeichnet, dass** die Polarität der Sperrschicht (8) ausgewählt aus einem Bereich mit einer unteren Grenze von 5%, vorzugsweise 10 %, insbesondere 15 %, und einer oberen Grenze von 50 %, vorzugsweise 45 %, insbesondere 35 %, höher als die Polarität der Trägerschicht (7) ist.

3. Einlage (1) nach Anspruch 1 oder 2, **dadurch gekennzeichnet, dass** die Sperrschicht (8) härter als die Trägerschicht (7) ist.

4. Einlage (1) nach einem der Ansprüche 1 bis 3, **dadurch gekennzeichnet, dass** die Sperrschicht (8) eine Abstützfläche (5) für ein Rohr bildet.

5. Einlage (1) nach einem der Ansprüche 1 bis 4, **dadurch gekennzeichnet, dass** die Sperrschicht (8) Erhöhungen (9) bzw. Vertiefungen (10) aufweist.

6. Einlage (1) nach Anspruch 5, **dadurch gekennzeichnet, dass** der Abstand vom höchsten Punkt der Erhöhung (9) bis zum tiefsten Punkt der Vertiefung (10) aus einem Bereich mit einer unteren Grenze von 0,01 mm, vorzugsweise 0,1 mm, insbesondere 0,5 mm, und einer oberen Grenze von 5 mm, vorzugsweise 3 mm, insbesondere 1 mm, ausgewählt ist.

7. Einlage (1) nach einem der Ansprüche 1 bis 6, **dadurch gekennzeichnet, dass** die Höhe der Sperrschicht (8) aus einem Bereich mit einer unteren Grenze von 0,1 mm, vorzugsweise 0,5 mm, insbesondere 0,7 mm und einer oberen Grenze von 10 mm, vorzugsweise 5 mm, insbesondere 1 mm, ausgewählt ist.

8. Einlage (1) nach einem der Ansprüche 1 bis 7, **dadurch gekennzeichnet, dass** Längsrippen (6) und/oder Noppen angeordnet sind, die zumindest teilweise mit der Sperrschicht (8) beschichtet sind.

9. Einlage (1) nach Anspruch 8, **dadurch gekennzeichnet, dass** im Basisbereich (2) ein Mittenbereich (12) in Form eines Steges (13) ausgebildet ist, an welchen sich Noppen und/oder Längsrippen (6) anschließen, die die Abstützflächen (5) für ein Rohr bilden.

10. Einlage (1) nach einem der Ansprüche 8 oder 9, **dadurch gekennzeichnet, dass** die Noppen und/oder Längsrippen (6) und Stege (13) aus unterschiedlichen Materialien gebildet sind.

11. Einlage (1) nach einem der Ansprüche 8 bis 10, **dadurch gekennzeichnet, dass** Noppen und/oder Längsrippen (6) unterschiedlichen Durchmessers sowohl in Draufsicht als auch im Querschnitt angeordnet sind.

12. Einlage (1) nach einem der Ansprüche 8 bis 11, **dadurch gekennzeichnet, dass** die Noppen und/oder Längsrippen (6), welche an den Steg (13) im Mittenbereich (12) anschließen einen geringeren Durchmesser aufweisen als die Längsrippen (6) benachbart zu den Seitenbereichen (3).

13. Einlage (1) nach einem der Ansprüche 8 bis 12, **dadurch gekennzeichnet, dass** die Längsrippen (6) quer zur Längsrichtung segmentiert sind.

14. Einlage (1) nach einem der Ansprüche 1 bis 13, **dadurch gekennzeichnet, dass** ein Freiraum (15) im Basisbereich (2), vorzugsweise im Mittenbereich (12) des Basisbereichs (2), angeordnet ist.

15. Einlage (1) nach Anspruch 14, **dadurch gekennzeichnet, dass** der Freiraum (15) vollständig vom Material des Basisbereichs (2) umschlossen ist.

16. Einlage (1) nach Anspruch 14 oder 15, **dadurch gekennzeichnet, dass** im Freiraum (15) ein Überdruck besteht.

17. Einlage (1) nach einem der Ansprüche 1 bis 16, **dadurch gekennzeichnet, dass** an zumindest einem Seitenbereich (3) Erhöhungen (16) angeordnet sind.

18. Einlage (1) nach Anspruch 17, **dadurch gekennzeichnet, dass** die Erhöhungen (16) im Seitenbereich (3) und/oder an der Seitenfläche mehrschichtig ausgebildet sind.

19. Einlage (1) nach einem der Ansprüche 1 bis 18, **dadurch gekennzeichnet, dass** die Sperrschicht (8) aus einem Elastomer gebildet ist, das gegebenenfalls gefüllt ist mit zumindest einem Füllstoff und/oder Russ und/oder einem Extrusionshilfsmittel.

20. Einlage (1) nach Anspruch 19, **dadurch gekennzeichnet, dass** das Elastomer der Sperrschicht (8) auf Basis eines natürlichen und/oder synthetischen Kautschuks gebildet ist.

21. Einlage (1) nach Anspruch 20, **dadurch gekennzeichnet, dass** ein Kautschuk aus einer Gruppe umfassend Naturkautschuk (NK), Styrol-Butadien-Kautschuk (SBR), Acrylnitril-1,3-Butadien-Kautschuk, Nitril-Butyl-Kautschuk (NBR), NVC-, Chloropren-(CR), Ethen/Propylen-Dien Terpolymere (EPDM)-Kautschuk, chlorierten bzw. chlorsulfonierten Polyethylenkautschuk (CM bzw. CSM), Epichlorhydrinkautschuk (ECO), Fluorkautschuk (FKM), Ethylenvinylacetatkautschuk (EAM), Silikonkautschuk (VMQ), Polyurtehankautschuk, oder einem Verschnitt daraus, ausgewählt ist.

22. Einlage (1) nach einem der Ansprüche 19 bis 21, **dadurch gekennzeichnet, dass** Russ in einer Menge aus einem Bereich mit einer unteren Grenze von 0,01 phr, vorzugsweise 0,1 phr, insbesondere 2 phr, und einer oberen Grenze von 250 phr, vorzugsweise 150 phr, insbesondere 100 phr, ausgewählt ist.

23. Einlage (1) nach einem der Ansprüche 19 bis 22, **dadurch gekennzeichnet, dass** ein Füllstoff aus der Gruppe umfassend Carbonate, z.B. Kreide, Sulfate, Silikate, z.B. Kaolin, Kieselsäuren, Oxide und/oder organische Füllstoffe ausgewählt ist.

24. Einlage (1) nach Anspruch 23, **dadurch gekennzeichnet, dass** der Füllstoff in einer Menge aus einem Bereich mit einer unteren Grenze von 0,01 phr, vorzugsweise 0,1 phr, insbesondere 1 phr, und einer oberen Grenze von 300 phr, vorzugsweise 200 phr, insbesondere 100 phr, ausgewählt ist.

25. Einlage (1) nach einem der Ansprüche 19 bis 24, **dadurch gekennzeichnet, dass** ein Extrusionshilfsmittel in einer Menge aus einem Bereich mit einer unteren Grenze von 0,01 phr, vorzugsweise 0,1 phr, insbesondere 0,5 phr, und einer oberen Grenze von 30 phr, vorzugsweise 20 phr, insbesondere 15 phr, ausgewählt ist.

26. Rohrschelle mit einer Einlage (1) gemäß einem der Ansprüche 1 bis 25.

27. Rohrschelle nach Anspruch 26, **dadurch gekennzeichnet, dass** die Noppen und/oder Längsrippen (6) der Einlage (1) die Stege (13) an jener dem Rohr zugewandten Oberfläche zumindest im unmontierten Zustand überragen.

28. Rohrschelle nach Anspruch 26 oder 27, **dadurch gekennzeichnet, dass** ein Raum zwischen der Rohrschelle und zumindest dem Mittenbereich (12) des Basisbereichs (2) der Einlage (1) gebildet ist, wobei der Raum vorzugsweise zwischen den, an den Mittenbereich (12) angrenzenden, Längsrippen (6) gebildet ist.
